# EUROPÄISCHE PATENTSCHRIFT

(11) **EP 1 689 623 B1**
(45) Veröffentlichungstag und Bekanntmachung des Hinweises auf die Patenterteilung: **18.04.2007**
(21) Anmeldenummer: 04819632.3
(22) Anmeldetag: 30.11.2004
(51) Int. Cl.: B60R 22/46

(54) **GURTAUFROLLER-STRAFFER-KOMBINATION**
BELT RETRACTOR AND TENSIONER COMBINATION
ENSEMBLE RETRACTEUR/PRETENSIONNEUR DE CEINTURE DE SECURITE

(30) Priorität: 02.12.2003 DE 10356206
(43) Veröffentlichungstag der Anmeldung: 16.08.2006
(73) Patentinhaber: AUTOLIV DEVELOPMENT AB, 447 83 Vargarda (SE)
(72) Erfinder: SCHMIDT, Martin, 25337 Elmshorn (DE); BÖSCH, Stefan, 21644 Revenahe (DE); SCHNEIDER, Thomas, 25813 Husum (DE); SUHR, Stefan, 25336 Elmshorn (DE); FREY, Erne, 25335 Elmshorn (DE)
(74) Vertreter: Müller, Karl-Ernst
(86) Internationale Anmeldenummer: PCT/EP2004/013562
(87) Internationale Veröffentlichungsnummer: WO 2005/054016

(56) Entgegenhaltungen:
- DE-A1- 10 213 906
- DE-A1- 19 512 660
- US-A- 5 881 962
- US-A- 5 924 640

## Beschreibung

Die Erfindung betrifft einen Rotationsstraffer für einen Sicherheitsgurt, insbesondere in Kraftfahrzeugen, mit einem Gurtaufroller, dessen den Gurtwickel tragende Gurtwelle bei Auslösung des daran gekuppelten Strafferantriebs in Aufwickelrichtung des Sicherheitsgurtes gedreht wird, wobei der Gurtwelle als Strafferantrieb ein auf seinem Umfang Ausnehmungen zur Aufnahme von als Antriebsmittel wirkenden Massekörpern aufweisendes Antriebsrad zugeordnet ist und die Massekörper in einem Rohr magaziniert und in dem Rohr über einen am Ende des Rohres angeordneten Gasgenerator beschleunigbar sind, wobei das Rohr mit einem in der Ebene des Antriebsrades verlaufenden, tangential in das Antriebsrad einmündenden geradlinigen Endabschnitt ausgebildet ist.

Ein Rotationsstraffer mit den vorgenannten Merkmalen ist in der DE 102 13 906 A1 beschrieben; soweit die Gurtwelle des zugehörigen Rotationsstraffers in den Gehäuseschenkeln eines U-förmig ausgebildeten Gehäuses gelagert ist, ist an einem über den zugeordneten Gehäuseschenkel hervorstehenden Ende der Gurtwelle ein Antriebsrad angeordnet, welches auf seinem Umfang mit kalottenförmigen Ausnehmungen zur Aufnahme von Massekugeln als Antriebsmitteln für das Antriebsrad versehen ist. In der Ebene des Antriebsrades ist an dem Gehäuseschenkel ein einen Kanal ausbildendes Rohr befestigt, in dem eine Anzahl von Massekugeln magaziniert ist und der an seinem Ende eine vorzugsweise pyrotechnische Antriebseinheit aufweist. Der Kanal umschließt das Antriebsrad mit einem von außen nach innen gerichteten Verlauf derart, dass der Kanal tangential in das Antriebsrad einmündet. Der Kanal umschließt dabei über einen Teilumfang das Antriebsrad beziehungsweise dessen kalottenförmige Ausnehmungen und hat eine Austrittsöffnung, über welche die in dem Kanal über das Antriebsrad geleiteten Massekugeln den Kanal verlassen, wozu der Gurtaufroller mit einem nicht im einzelnen beschriebenen Auffangbehälter versehen ist.

Mit dem bekannten Rotationsstraffer ist der Nachteil verbunden, dass die Anordnung des Rohres mit dem Kanal zur Aufnahme der Massekugeln auf einer Seite des Gurtaufrollergehäuses einen entsprechenden Raumbedarf verursacht, zumal das das Antriebsrad umgreifende Rohr in seiner Anordnung die Abmessungen des Gurtaufrollergehäuses deutlich überragt. Damit lässt sich die Gurtaufroller-Straffer-Kombination nicht in jeder Lage in einem Kraftfahrzeug montieren. Da aufgrund des in einer Ebene das Antriebsrad umgreifenden Rohres der Auffangbehälter ebenenversetzt angeordnet werden muss, ergibt sich ebenfalls eine entsprechend große axiale Baubreite der Gurtaufroller-Straffer-Kombination. Weiterhin ist auch die durch die einseitige Anordnung des Rohres bedingte Gewichtsverteilung ungleichmäßig, was zu Montageproblemen führen kann. Die erforderliche Rohrbiegung ist fertigungstechnisch aufwendig und schwierig an dem Gurtaufrollergehäuse zu montieren.

Bei der aus der US 5 924 640 Gurtaufroller-Straffer-Kombination befindet sich die Treibladung und ein daran anschließender geradliniger Verlaufsabschnitt innerhalb der Gurtwelle, wobei der Endabschnitt des Rohres an diesen Abschnitt über einen Umbiegungsabscbnitt angeschlossen ist, wie dies sich auch aus der DE 102 13 609 A1 im Grundsatz ergibt.

Der Erfindung liegt daher die Aufgabe zugrunde, bei einem Rotationsstraffer mit den gattungsgemäßen. Merkmalen die Anordnung des die Massekörper aufnehmenden Rohres in Herstellung und Montage zu vereinfachen und eine kompaktere Bauweise der Gurtaufroller-Straffer-Kombination zu ermöglichen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass das Rohr U-förmig mit zwei zwischen den einander gegenüberliegenden Gehäuseschenkeln des U-förmigen Gurtaufrollergehäuses in einem parallelen Verlauf zur Gurtwelle liegenden, geradlinigen Verlaufsabschnitten und mit einem im Bereich des der Antriebsseite gegenüberliegenden Gehäuseschenkels verlaufenden Umbiegungsabschnitt ausgebildet und in der Ebene des Antriebsrades an dem geradlinigen Endabschnitt angeschlossen ist. Mit der Erfindung ist der Vorteil verbunden, dass aufgrund der Verlagerung des Rohres von der Außenseite des einen Gehäuseschenkels in den zwischen den beiden Gehäuseschenkeln liegenden Raum der Platzbedarf für die Anordnung des Strafferantriebs deutlich verringert und somit eine kompaktere Bauweise der Gurtaufroller-Straffer-Kombination gegeben ist. Hierbei erweist sich insbesondere als vorteilhaft, dass das Rohr innerhalb der Abmessungen des Gurtaufrollergehäuses beziehungsweise innerhalb der Außenkontur angeordnet ist, sodass über die Kontur des Gurtaufrollergehäuses keine Teile der Straffereinheit mehr hervorstehen. Das Rohr selbst mit den im Wesentlichen geradlinigen Abschnitten ist einfacher herzustellen und zu montieren, und schließlich ist auch die Anordnung des Auffangbehälters in der Ebene des Antriebsrades möglich, weil diese Ebene mit Ausnahme des tangential anlaufenden Endabschnitts des Rohres frei von anderen Einbauten ist.

Aus Gründen einer kompakten Bauweise ist vorgesehen, dass die beiden geradlinigen Verlaufsabschnitte des Rohres jeweils in zwei benachbarten äußeren Eckbereichen des Gurtaufrollergehäuses angeordnet sind.

Hinsichtlich der Anordnung des Aufnahmebehälters ist vorgesehen, dass zwischen den einander gegenüberliegenden geradlinigen Verlaufsabschnitten des Rohres ein Aufnahmebehälter für die Aufnahme der nach Durchlauf durch das Antriebsrad aus diesem austretenden Massekörper angeordnet ist.

Soweit die durch den tangential zu dem Antriebsrad verlaufenden rohrförmigen Endabschnitt des Rohres getriebenen Massekörper in die Ausnehmungen des Antriebsrades eingesteuert werden müssen, um eine störungsfreie Drehung des Antriebrades zu gewährleisten, ist nach einem Ausführungsbeispiel vorgesehen, dass an dem freien Ende des rohrförmigen Endabschnitts ein Einführungselement angeordnet ist, welches die Massekörper in die Ausnehmungen des Antriebrades einsteuert.

In einer alternativen Ausführungsform kann vorgesehen sein, dass der tangential zum Antriebsrad verlaufende rohrförmige Endabschnitt eine in seine Wandung eingebrachte, mit einem derartigen Radius ausgebildete Verformung aufweist, dass die durch den Endabschnitt getriebenen und über die Verformung der Wandung des Endabschnitts laufenden Massekörper in die Ausnehmungen des Antriebsrades eingesteuert sind. Hiermit ist der Vorteil verbunden, dass ein besonderes Bauteil für die Ansteuerung der Massekörper in das Antriebsrad entfällt und eine einfache und kostengünstige Montage des Rotationsstraffers gegeben ist.

In der Zeichnung sind Ausführungsbeispiele der Erfindung wiedergegeben, welche nachstehend beschrieben sind. Es zeigen:
- Fig. 1: eine Gurtaufroller-Straffer-Kombination in einer Gesamtansicht,
- Fig. 2: das zugehörige Rohr sowie die darin zu magazinierenden Massekugeln in einer Einzeldarstellung,
- Fig. 3: das Rohr gemäß Figur 2 in einer anderen Ausführungsform.

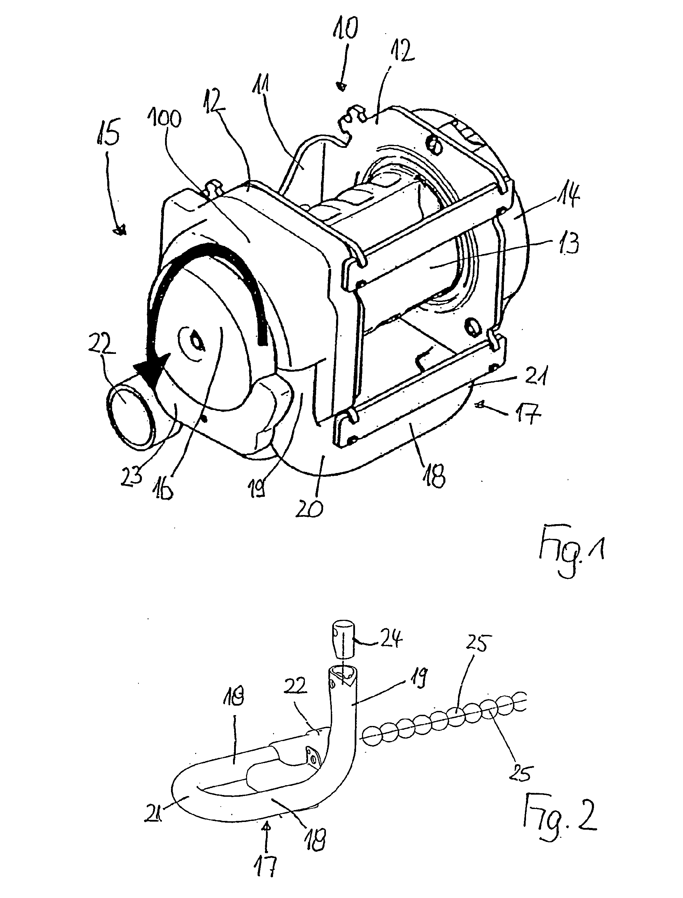

Die in Figur 1 dargestellte Gurtaufroller-Straffer-Kombination 10 weist ein U-förmiges Gurtaufrollergehäuse 11 mit seitlichen Gehäuseschenkeln 12 auf, wobei die Gurtwelle 13 in den Gehäuseschenkeln 12 gelagert ist. An dem einen, in der Darstellung der Figur 1 rechten Ende der Gurtwelle 13 ist auf der Außenseite des zugehörigen Gehäuseschenkels 12 eine Funktionseinheit 14 angeordnet, die die gurtbandsensitive und/oder fahrzeugsensitive Verriegelungseinheit für die Gurtwelle sowie die zugehörige Aufwickelfeder umfassen kann; dies ist nicht Gegenstand der vorliegenden Erfindung.

Auf der gegenüberliegenden Seite ist die Antriebsseite 15 der zugeordneten Straffereinheit ausgebildet, die ein mit dem über den zugeordneten Gehäuseschenkel 12 hervorstehenden Ende der Gurtwelle gekoppeltes Antriebsrad 16 umfasst. Die Ausbildung und die Funktion des Antriebsrades im Zusammenwirken mit in einem Rohr zugeführten Massekugeln als Antriebsmittel ist in der gattungsbildenden DE 195 12 660 A1 ausführlich dargestellt, sodass insoweit auf die Offenbarung der gattungsbildenden Druckschrift Bezug genommen wird.

Die Massekugeln werden über ein an dem Gurtaufrollergehäuse 11 angeordnetes Rohr 17 zugeführt, und dieses Rohr 17 weist zunächst einen parallel zur Gurtwelle 13 und zwischen den einander gegenüberliegenden Gehäuseschenkeln 12 des Gurtaufrollergehäuses 11 verlaufenden geradlinigen Abschnitt 18 auf. Dieser geradlinige Abschnitt 18 geht über eine entsprechende Abbiegung 20 über in einen auf der Außenseite des zugeordneten Gehäuseschenkels 12 angeordneten Endabschnitt 19, der tangential in das Antriebsrad 16 einläuft.

Wie in Figur 1 angedeutet, jedoch in Figur 2 in einem etwas abgewandelten Ausführungsbeispiel deutlicher dargestellt ist, ist das Rohr 17 insgesamt U-förmig ausgebildet, indem zusätzlich zu dem in Figur 1 dargestellten ersten geradlinigen Abschnitt 18 auf der gegenüberliegenden Seite des Gurtaufrollergehäuses 11 ein zweiter geradliniger Abschnitt 18 angeordnet ist, an dessen Ende ein pyrotechnischer Antrieb 22 befindlich ist. Die beiden geradlinigen Abschnitte 18 des Rohres 17 sind durch einen Umbiegungsabschnitt 21 miteinander verbunden, der im Bereich des der Antriebsseite 15 gegenüberliegenden Gehäuseschenkels 12 verläuft.

Da die Ebene des Antriebsrades 16 mit Ausnahme des Endabschnitts 19 frei von weiteren Einbauten ist, ist in dieser Ebene in dem Bereich zwischen den einander gegenüberliegenden geradlinigen Abschnitten 18 des Rohres 17 ein Aufnahmebehälter 23 angeordnet, in welchem die Massekugeln nach ihrem Durchlauf durch das Antriebsrad 16 aufgenommen werden.

Das Rohr 17 mündet tangential an dem Antriebsrad 16. Im weiteren Verlauf der Bewegung der Massekugeln wird der Strafferkanal unmittelbar durch das Antriebsrad 16 und ein das Antriebsrad 16 umfassendes Gehäuse 100 gebildet. Die Massekugeln werden dabei um einen Umfangsabschnitt von wenigstens 160 Grad bis 210 Grad um das Antriebsrad 16 geführt. Dies ist insbesondere dann von Vorteil, wenn eine Ausbildung des Straffers gemäß der DE 102 13 906 A1 vorgesehen ist. Bei diesem Straffer wird das Antriebsrad 16 durch Festlegen des selben im Anschluss an den Straffvorgang aus dem Kraftfluss während der Kraftbegrenzung ausgekoppelt, so dass die Massekugeln im Antriebsrad verbleiben können, ohne dass diese die Kraftbegrenzung stören. Damit kann der erforderliche Auffangbehälter wesentlich kleiner dimensioniert werden.

Eine entsprechende Darstellung des Rohres ist Figur 2 zu entnehmen, wobei an dem Ende des Endabschnitts 19 ein Einführungselement 24 dargestellt ist, welches in montiertem Zustand in das Ende des Endabschnitts 19 eingeschoben ist und für eine Einsteuerung der durch das Rohr 17 laufenden Massekugeln 25 sorgt.

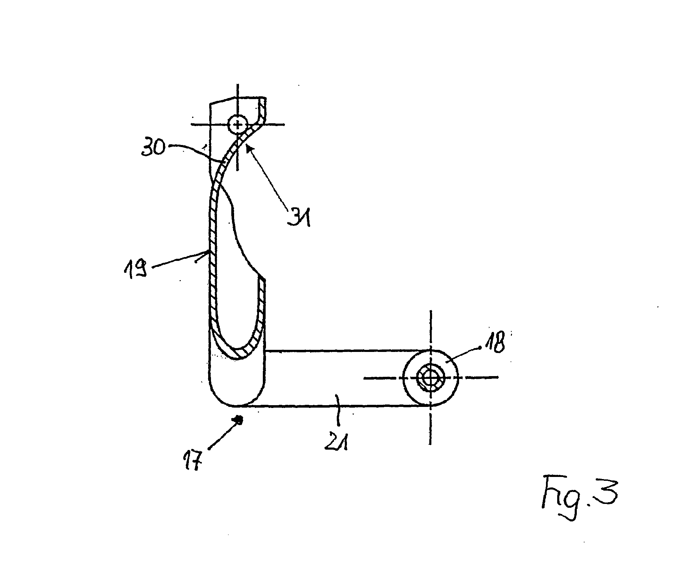

Hinsichtlich der Einsteuerung der Massekugeln 25 in die zugeordneten Ausnehmungen des Antriebrades 16 ist bei dem in Figur 3 dargestellten Ausführungsbeispiel anstelle des aus Figur 2 ersichtlichen Einführungselementes in die Wandung 30 des Endabschnitts 19 eine Verformung 31 eingebracht, die mit einem derartigen Radius ausgebildet ist, dass die durch den Endabschnitt 19 getriebenen und über die Verformung 31 der Wandung 30 des Endabschnitts 19 laufenden Massekugeln 25 in die Ausnehmungen des Antriebrades 16 eingesteuert werden.

## Patentansprüche

1. Rotationsstraffer für einen Sicherheitsgurt, insbesondere in Kraftfahrzeugen, mit einem Gurtaufroller, dessen den Gurtwickel tragende Gurtwelle (13) bei Auslösung des daran gekuppelten Strafferantriebs (22) in Aufwickelrichtung des Sicherheitsgurtes gedreht wird, wobei der Gurtwelle (13) als Strafferantrieb ein auf seinem Umfang Ausnehmungen zur Aufnahme von als Antriebsmittel wirkenden Massekörpern (25) aufweisendes Antriebsrad (16) zugeordnet ist und die Massekörper(25) in einem Rohr (17) magaziniert und in dem Rohr (17) über einen am Ende des Rohres angeordneten Gasgenerator beschleunigbar sind, wobei das Rohr (17) mit einem in der Ebene des Antriebsrades (16) verlaufenden, tangential in das Antriebsrad (16) einmündenden geradlinigen Endabschnitt (19) ausgebildet ist, **dadurch gekennzeichnet, dass** das Rohr (17) U-förmig mit zwei zwischen einander gegenüberliegenden Gehäuseschenkeln (12) eines U-förmigen Gurtaufrollergehäuses (11) in einem parallelen Verlauf zur Gurtwelle (13) liegenden, geradlinigen Verlaufsabschnitten (18) und mit einem im Bereich des der Antriebsseite (15) gegenüberliegenden Gehäuseschenkels (12) verlaufenden Umbiegungsabschnitt (21) ausgebildet und in der Ebene des Antriebsrades (16) an dem geradlinigen Endabschnitt (19) angeschlossen ist.

2. Rotationsstraffer nach Anspruch 1, **dadurch gekennzeichnet, dass** die beiden geradlinigen Verlaufsabschnitte (18) des Rohres (17) jeweils in zwei benachbarten äußeren Eckbereichen des Gurtaufrollergehäuses (11) angeordnet sind.

3. Rotationsstraffer nach Anspruch 1 oder 2, **dadurch gekennzeichnet, dass** zwischen den einander gegenüberliegenden geradlinigen Verlaufsabschnitten (18) des Rohres (17) ein Aufnahmebehälter (23) für die Aufnahme der nach Durchlauf durch das Antriebsrad (16) aus diesem austretenden Massekörper angeordnet ist.

4. Rotationsstraffer nach einem der Ansprüche 1 bis 3, **dadurch gekennzeichnet, dass** an dem freien Ende des tangential zum Antriebsrad (16) verlaufenden rohrförmigen Endabschnitts (19) ein Einführungselement (24) angeordnet ist, welches die durch den Endabschnitt (19) getriebenen Massekörper in die Ausnehmungen des Antriebsrades einsteuert.

5. Rotationsstraffer nach einem der Ansprüche 1 bis 3, **dadurch gekennzeichnet, dass** der tangential zum Antriebsrad (16) verlaufende rohrförmige Endabschnitt (19) eine in seine Wandung (30) eingebrachte, mit einem derartigen Radius ausgebildete Verformung (31) aufweist, dass die durch den Endabschnitt (19) getriebenen und über die Verformung (31) der Wandung (30) des Endabschnitts (19) laufenden Massekörper in die Ausnehmungen des Antriebsrades (16) eingesteuert sind.

## Claims

1. Rotating tensioner for a safety belt, especially in motor vehicles, comprising a belt retractor, the belt shaft (13) of which supports the belt winding and rotates in the take-up direction of the safety belt when the tensioning drive (22) coupled to the belt shaft is released, whereby the belt shaft (13) as tensioning drive is associated with a drivewheel (16) with recesses on the periphery thereof for accepting mass bodies (25) acting as drive means , and the mass bodies (25) are stored in a tube (17) and accelerated in the tube (17) by means of a gas generator arranged at one end of the tube, whereby the tube (17) is configured with a straight end section (19) that runs in the plane of the drivewheel (16) and tangentially flows into the flywheel (16), **characterized in that** the tube (17) is configured U-shaped with two straight sections (18) located between opposing housing arms (12) of a belt roller housing (11) and running in a parallel direction to the belt shaft (13), and with one bent section (21) running in the vicinity of the housing arm (12) located opposite the drive side (15) and that the tube is attached on the straight end section (19) in the plane of the drivewheel (16).

2. Rotating tensioner according to claim 1, **characterized in that** the two straight sections (18) of the tube (17) are respectively arranged in two adj acent outer corner regions of the belt roller housing (11).

3. Rotating tensioner according to claim 1 or 2, **characterized in that** a receptacle (23) for accepting the mass bodies passing through and exiting the drivewheel (16) is arranged between the opposing straight sections (18) of the tube (17).

4. Rotating tensioner according to one of the claims 1 to 3, **characterized in that** a feeding element (24) that feeds into the recesses of the drivewheel the mass bodies that are driven through the tubular end section of the tube (19) is arranged on the open end of the tubular end section (19) that runs in a tangential direction to the drivewheel (16).

5. Rotating tensioner according to one of the claims 1 to 3, **characterized in that** the tubular end section (19) running a tangential direction to the drivewheel (16) has a deformation (31) introduced into the wall (30) of the end section, this deformation being configured with such a radius that the mass bodies that are driven through the end section (19) and run across the wall (30) of the end section (19) via the deformation (31) are fed into the recesses of the drivewheel (16).

## Revendications

1. Rétracteur rotatif pour une ceinture de sécurité, en particulier dans des véhicules automobiles, comportant un enrouleur de ceinture, dont l'arbre d'enroulement (13), portant la sangle enroulée, tourne dans le sens de déroulement de la ceinture de sécurité au moment du déclenchement de l'entraînement du rétracteur (22), couplé à cet arbre d'enroulement, sachant qu'une roue d'entraînement (16), munie sur son pourtour d'évidements destinés à recevoir des corps massiques (25) agissant comme moyens d'entraînement, est associée à l'arbre d'enroulement (13) en tant qu'entraînement du rétracteur et les corps massiques (25) sont logés dans un tube (17) et peuvent être accélérés dans le tube (17) par l'intermédiaire d'un générateur de gaz monté à l'extrémité du tube, ledit tube (17) étant réalisé avec une zone d'extrémité (19) droite, s'étendant dans le plan de la roue d'entraînement (16) et débouchant tangentiellement dans la roue d'entraînement (16), **caractérisé en ce que** le tube (17) est réalisé en forme de U avec deux tronçons droits (18), situés parallèlement à l'arbre d'enroulement (13) entre des branches (12) face à face d'un boîtier d'enrouleur de ceinture (11) en forme de U, et avec un tronçon courbe (21) s'étendant dans la zone de la branche (12) du boîtier face au côté d'entraînement (15), et est attaché à la zone d'extrémité (19) droite dans le plan de la roue d'entraînement (16).

2. Rétracteur rotatif selon la revendication 1, **caractérisé en ce que** les deux tronçons droits (18) du tube (17) sont disposés respectivement dans deux zones d'angle extérieures voisines du boîtier d'enrouleur de ceinture (11).

3. Rétracteur rotatif selon la revendication 1 ou 2, **caractérisé en ce qu'**un logement (23), destiné à recevoir les corps massiques sortant de la roue d'entraînement (16) après avoir traversé celle-ci, est agencé entre les tronçons droits (18), face à face, du tube (17).

4. Rétracteur rotatif selon l'une quelconque des revendications 1 à 3, **caractérisé en ce qu'**au niveau de l'extrémité libre de la zone d'extrémité (19) tubulaire, tangentielle à la roue d'entraînement (16), est disposé un élément d'introduction (24), par lequel les corps massiques propulsés à travers la zone d'extrémité (19) sont guidés à l'intérieur des évidements de la roue d'entraînement.

5. Rétracteur rotatif selon l'une quelconque des revendications 1 à 3, **caractérisé en ce que** la zone d'extrémité (19) tubulaire, tangentielle à la roue d'entraînement (16), comporte une déformation (31) ménagée dans sa paroi (30) avec un rayon de courbure tel que les corps massiques, propulsés à travers la zone d'extrémité (19) et passant par la déformation (31) dans la paroi (30) de la zone d'extrémité (19), sont guidés à l'intérieur des évidements de la roue d'entraînement (16).
